# EUROPÄISCHE PATENTSCHRIFT

(11) **EP 0 458 080 B1**
(45) Veröffentlichungstag und Bekanntmachung des Hinweises auf die Patenterteilung: **02.03.1994**
(21) Anmeldenummer: 91106671.0
(22) Anmeldetag: 25.04.1991
(51) Int. Cl.: B25D 17/00, F04D 29/48, H02K 9/06, B25D 16/00

(54) **Von Hand führbare elektrische Werkzeugmaschine**
Hand operated electrical machine tool
Machine-outil électrique pour manipulation manuelle

(30) Priorität: 25.05.1990 DE 4016774
(43) Veröffentlichungstag der Anmeldung: 27.11.1991
(73) Patentinhaber: ROBERT BOSCH GMBH, 70442 Stuttgart (DE)
(72) Erfinder: Bleicher, Manfred, W-7022 Leinfelde-Echterd (DE); Bohne, Ulrich, Dipl.-Ing. (FH), W-7441 Kohlberg (DE); Prahst, Eberhard, Dipl.-Ing., W-7307 Aichwald (DE)

(56) Entgegenhaltungen:
- DE-A- 746 105
- DE-A- 2 016 964
- DE-A- 2 407 796
- DE-A- 2 949 645
- DE-A- 3 224 050
- DE-A- 3 336 711
- DE-A- 3 340 799
- DE-A- 3 503 172
- DE-B- 1 045 170
- GB-A- 503 884
- GB-A- 602 299

## Beschreibung

### Stand der Technik

Die Erfindung geht aus von einer von Hand führbaren elektrischen Werkzeugmaschine nach der Gattung des Anspruchs 1. Es sind bereits Handwerkzeugmaschinen dieser Art, zum Beispiel Bohrmaschinen, Winkelschleifer, Kreissägen oder dergleichen, mit Radialgebläsen für die Motorkühlung bekannt (DE-A 35 03 172). Hierbei wird die Kühlluft vom Lüfterrad radial über radiale Luftaustrittsöffnungen nach außen und ins Freie abgegeben. Der auf diese Weise verwirklichbare Luftvolumenstrom ist relativ gering, weswegen nur ein entsprechend geringer Teil der Verlustwärme des Motors abgeführt und dieser nur mit etwa mittlerer Leistung betrieben werden kann. Es läßt sich also nur ein geringerer Luftvolumenstrom realisieren. Außerdem ist die Geräuschentwicklung erheblich.

Bei dem Elektrowerkzeug nach der DE-A 33 40 799 soll eine Verbesserung der Kühlung und eine Verminderung des abgestrahlten Geräusches dadurch erreicht werden, daß in einem den Getriebekasten umgebenden Isolierstoffmantel Kühlluftleitkanäle angeordnet sind. Aus der DE-A 74 61 05 ist ein Spülluftgebläse für Schiffsdieselmaschinen bekanntgeworden, bei dem bei Änderung der Drehrichtung des Gebläses eine die Auslaßöffnung bildende Abschlußklappe verschwenkt wird.

### Vorteile der Erfindung

Die erfindungsgemäße von Hand führbare elektrische Werkzeugmaschine mit den kennzeichnenden Merkmalen des Anspruchs 1 hat demgegenüber den Vorteil, daß durch den jeweiligen etwa tangentialen Kanalabschnitt die Luft bis zur jeweils zugeordneten Luftaustrittsöffnung geleitet wird und sich somit eine Verbesserung in der Luftführung ergibt, und zwar in beiden Arbeitsrichtungen, d. h. sowohl bei Rechtslauf als auch bei Linkslauf. Es hat sich gezeigt, daß der vom Radialgebläse geförderte Luftvolumenstrom bis zu etwa 15 % gesteigert werden konnte, wobei einhergehend damit eine Verminderung der Geräuschentwicklung erreicht wird. Die Erfindung schafft zugleich die Voraussetzungen dafür, Luftaustrittsöffnungen mit jeweils großem Durchlaßquerschnitt zu verwirklichen, wodurch die Luftabführung noch weiter verbessert werden kann. Die verbesserte Luftförderung und der gesteigerte Luftvolumenstrom machen es möglich, die Leistung des Motors zu erhöhen.

Durch die in den abhängigen Ansprüchen aufgeführten Maßnahmen sind vorteilhafte Weiterbildungen und Verbesserungen der erfindungsgemäßen Werkzeugmaschine möglich.

### Zeichnung

Ein Ausführungsbeispiel der Erfindung ist in der Zeichnung dargestellt und in der nachfolgenden Beschreibung näher erläutert. Es zeigen:
- Fig. 1: eine schematische Seitenansicht eines Teils einer von Hand geführten elektrischen Werkzeugmaschine,
- Fig. 2: einen teilweisen Schnitt entlang der Linie II-II in Fig. 1 in demgegenüber größerem Maßstab,
- Fig. 3: einen Schnitt entlang der Linie III-III in Fig. 2,
- Fig. 4: eine schematische perspektivische Ansicht allein des Einsatzteiles,
- Fig. 5: einen Schnitt etwa entsprechend demjenigen in Fig. 2 des Einsatzteiles.

### Beschreibung des Ausführungsbeispieles

Als Beispiel einer von Hand geführten Werkzeugmaschine 10 ist schematisch lediglich ein Teil eines Bohrhammers gezeigt, der ein inneres Gehäuse 11 aus Aluminium und eine äußere Gehäusewandung 12 z. B. aus Kunststoff aufweist. Im Gehäuse ist ein nicht weiter gezeigter elektrischer Motor untergebracht, der dem Antrieb des nicht weiter gezeigten Werkzeuges dient. Die Antriebswelle des Motors kann zugleich als Welle für ein nicht weiter gezeigtes Lüfterrad als Teil eines Radialgebläses 13 dienen. Das Lüfterrad ist z. B. in üblicher Weise in einem inneren Luftführungsgehäuse untergebracht. Das Radialgebläse 13 hat insbesondere die Aufgabe der Kühlung des Motors. In üblicher Weise wird durch die Antriebsbewegung des Motors über dessen Antriebswelle und meist ein nachgeschaltetes Getriebe das nicht sichtbare Werkzeug angetrieben, wobei gleichzeitig auch das Lüfterrad des Radialgebläses 13 bei Rechts lauf des Werkzeugs in der einen Drehrichtung und bei Linkslauf des Werkzeuges in der anderen Drehrichtung angetrieben wird.

Teil des Radialgebläses 13 ist ein Luftführungskanal 14 im Inneren des Gehäuses 11, der dort z. B. im Luftführungsgehäuse ausgebildet ist. Der Luftführungskanal 14 ist beim gezeigten Ausführungsbeispiel zumindest im wesentlichen kreisförmig. Er erstreckt sich in Umfangsrichtung über annähernd 360° Umfangswinkel. Der Luftführungskanal 14 steht zum einen mit in üblicher Weise gestalteten, radialen Luftaustrittsöffnungen 15 in der Gehäusewandung 12 in Verbindung. Durch diese Luftaustrittsöffnungen 15 kann die vom Lüfterrad geförderte Kühlluft austreten, ganz gleich, ob die Werkzeugmaschine 10 im Betrieb mit Rechtslauf betrieben wird und dabei die Luft in Pfeilrichtung 16 durch den Luftführungskanal 14 geleitet wird oder statt dessen der Betrieb im Linkslauf erfolgt und die Luft im Luftführungskanal 14 dabei gegensinnig dazu in Pfeilrichtung 17 geführt wird.

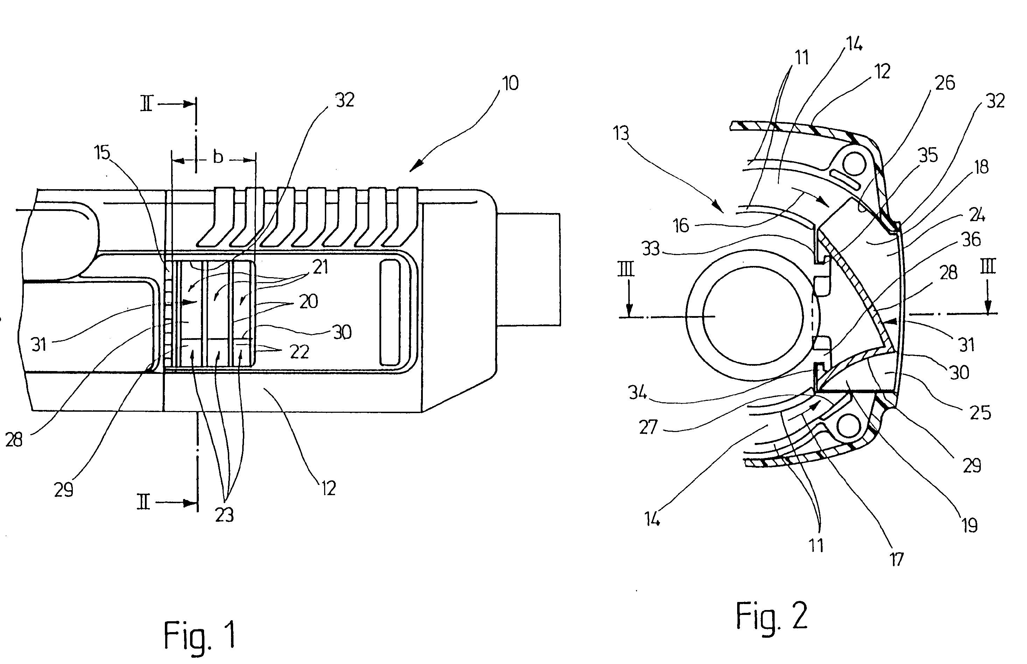

Eine wesentliche Besonderheit liegt darin, daß der Luftführungskanal 14 zusätzlich zu den radialen Luftaustrittsöffnungen 15 diesen axial benachbart in jedem in Richtung der jeweiligen Strömung gemäß Pfeil 16 und Pfeil 17 gesehen endseitigen Bereich zumindest einen Kanalabschnitt 18 und 19 wesentlicher Breite aufweist, der jeweils zumindest in etwa tangential an den Luftführungskanal 14 angeschlossen ist. Jeder dieser beiden etwa tangentialen Kanalabschnitte 18, 19 könnte prinzipiell, parallel zur Motorachse gesehen, über eine erhebliche Breite b (Fig. 1) ohne Unterteilung verlaufen und somit dort, wo der Kanalabschnitt 18, 19 im Bereich der Gehäusewandung 12 ausmündet, eine entsprechend breite Luftaustrittsöffnung haben. Aus Gründen der Stabilisierung der Luftführung, aus Schutz- und Sicherheitsgründen und auch aus gestalterischen Gründen ist jedoch der in den Zeichnungen obere Kanalabschnitt 18 mittels einzelner Stege 20 dazwischen in mehrere Einzelkanalabschnitte 21 unterteilt. In gleicher Weise ist der untere Kanalabschnitt 19 mittels einzelner Stege 22 dazwischen in mehrere Einzelkanalabschnitte 23 unterteilt, wobei die jeweiligen Einzelkanalabschnitte 21 des Kanalabschnitts 18 auf gleicher Höhe nebeneinander verlaufen, ebenso wie die anderen Einzelkanalabschnitte 23 des Kanalabschnitts 19.

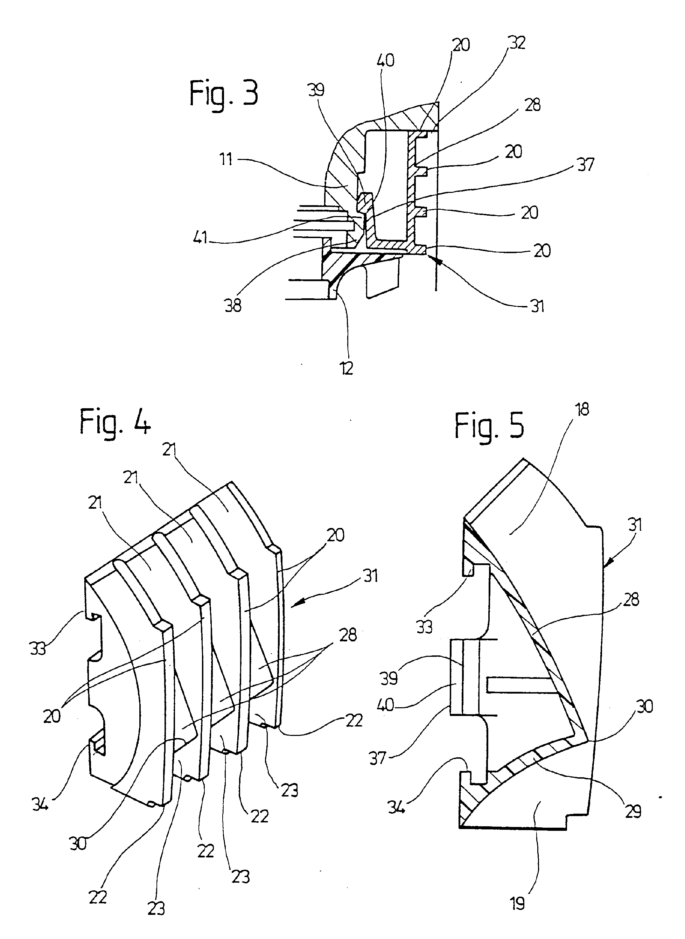

Wie sich insbesondere aus Fig. 2 ersehen läßt, sind die beiden etwa tangentialen Kanalabschnitte 18 und 19 derart an den restlichen, etwa kreisförmigen Luftführungskanal 14 angesetzt und in Bezug auf diesen ausgerichtet, daß der Luftführungskanal 14 für jede der beiden Strömungsrichtungen gemäß Pfeil 16 bzw. 17 dadurch einen etwa spiralförmigen Verlauf hat. Bei jedem Einzelkanalabschnitt 21 sind die beiden seitlichen Kanalwände durch jeweils einen Steg 20 gebildet. In gleicher Weise sind bei jedem Einzelkanalabschnitt 23 dessen beide seitliche Kanalwände durch jeweils einen Steg 22 gebildet. Diese Stege 20, 22 bewirken eine Stabilisierung der Luftführung. Sie dienen ferner der Sicherheit und Unfallverhütung sowie zugleich zur Isolationsabdeckung. Ersichtlich sind die Stege 20, 22 im Verhältnis zur Gesamtbreite b sehr schmal, so daß sich je Einzelkanalabschnitt 21 bzw. 23 Luftaustrittsöffnungen 24 bzw. 25 wesentlicher Breite im Verhältnis zur Breite der sehr schmalen Stege 20, 22 ergeben. Beim oberen Kanalabschnitt 18 ist dessen in radialer Richtung des Verlaufs des Luftführungskanals 14 gesehen äußere Kanalwand durch eine Leitwand 26 gebildet, die z. B. Teil des inneren Gehäuses 11 ist. Ebenso ist es beim unteren Kanalabschnitt 19, dessen äußere Kanalwand durch eine Leitwand 27 gebildet ist, die ebenfalls Teil des inneren Gehäuses 11 sein kann. Dagegen sind die in radialer Richtung jeweils inneren Kanalwände dieser beiden etwa tangentialen Kanalabschnitte 18,19 durch eine zusätzliche Leitwand 28 beim Kanalabschnitt 18 bzw. 29 beim Kanalabschnitt 19 gebildet. Diese Leitwände 26 - 29 sind jeweils allen Einzelkanalabschnitten 21 bzw. 23 gemeinsam und gehen über die Breite durch. Ersichtlich sind die inneren Leitwände 28 und 29 endseitig und im Bereich der Luftaustrittsöffnungen 24, 25 zusammengeführt. Die Leitwände 28, 29 können miteinander verbunden sein. Beim gezeigten Ausführungsbeispiel sind die Leitwände 28, 29 miteinander einstückig verbunden. Sie bilden gemäß Fig. 2 und 5 im Querschnitt etwa einen Keil mit dort nach rechts gerichteter Keilspitze. Die letztere enthaltende Firstlinie 30 des Keils verläuft etwa parallel zur Achse des nicht sichtbaren Motors. Aufgrund dieser Zusammenführung der beiden inneren Leitwände 28, 29 ergibt sich, daß die Einzelkanalabschnitte 21 des oberen Kanalabschnitts 18 und die Einzelkanalabschnitte 23 des unteren Kanalabschnitts 19 unmittelbar übereinander angeordnet sind. Wie vor allem Fig. 2 und 5 zeigen, ist die innere Leitwand 28 des einen, oberen und etwa tangentialen Kanalabschnitts 18 zumindest im wesentlichen eben gestaltet oder leicht konvex nach außen gekrümmt. Die innere Leitwand 29 des darunter befindlichen anderen Kanalabschnitts 19 ist dagegen etwa konkav gekrümmt. Gerade diese konkave Krümmung der Leitwand 29 führt beim Linkslauf und der zugeordneten Luftführung gemäß Pfeil 17 zu einer erheblichen Verbesserung des Luftaustritts. Bei enormer Stabilität können größere Luftmengen gefördert werden.

Von besonderem Vorteil kann es sein, wenn sich der Durchlaßquerschnitt der Kanalabschnitte 18 und 19, und damit derjenige der jeweiligen Einzelkanalabschnitte 21 bzw. 23, in der jeweiligen Strömungsrichtung gemäß Pfeil 16 bzw. 17 zu den Luftaustrittsöffnungen 24 bzw. 25 hin etwa trichterförmig erweitert. Diese etwa trichterförmige Erweiterung ist bereits durch den Verlauf der äußeren Leitwand 26 und inneren Leitwand 28 beim Kanalabschnitt 18 bzw. der äußeren Leitwand 27 und der inneren Leitwand 29 beim anderen Kanalabschnitt 19 erreicht, da diese Leitwände im Schnitt gemäß Fig. 2 ersichtlich einen sich nach außen hin erweiternden Querschnitt definieren. Es versteht sich, daß eine derartige Erweiterung des Durchlaßquerschnittes auch noch in axialer Richtung und z. B. dadurch erreicht werden kann, daß die einzelnen Stege 20 und 22 nicht, wie beim Ausführungsbeispiel gezeigt, parallel zueinander verlaufen, sondern ebenfalls schräg zueinander und derart,daß sich zu den Luftaustrittsöffnungen 24, 25 hin eine Erweiterung des Durchlaßquerschnittes ergibt.

Die einzelnen Stege 20, 22, die hier übereinander und etwa parallel zueinander ausgerichtet sind, sind beim gezeigten Ausführungsbeispiel zu jeweils durchgehenden Wänden einstückig miteinander verbunden, die zugleich mit den Leitwänden 28 und 29 einstückig sind. Ersichtlich werden die zuvor erläuterten, etwa tangentialen Kanalabschnitte 18,19 von einem eigenständigen Einsatzteil 31 in Form eines Kunststofformteiles gebildet, das die inneren Leitwände 28, 29 und die Stege 20,22 als einstückiges Gebilde aufweist. Dieses Einsatzteil 31 stellt somit ein kostengünstig herstellbares und leichtes Element dar. Es ist in eine dafür vorgesehene, z. B. seitliche, Öffnung 32 in der Gehäusewandung 12 eingesetzt. Das Einsatzteil 31 ist zugleich als Schutzverkleidung ausgebildet, die gegen Eindringen von Schmutz, Grobteilen od. dgl. in das Innere der Werkzeugmaschine 10 schützt und insofern also einen Doppelnutzen hat.

Das Einsatzteil 31 ist am Gehäuse 11 formschlüssig fixiert und gesichert. Es weist hierzu vorzugsweise angeformte, etwa hakenförmige Halter 33 und 34 auf, mit denen das Einsatzteil 31 auf den Haltern 33, 34 zugeordnete Schiebebahnen 35 bzw. 36 im Gehäuse 11 aufgeschoben ist. Zur Verrastung des aufgeschobenen Einsatzteiles 31 weist dieses zumindest einen vorzugsweise angeformten Riegel 37 auf, der beim Befestigen am Gehäuse 11 durch Aufschieben hinter einem gehäuseseitigen Sperrglied 38 einrastbar ist. Der Riegel 37 besteht aus einer Nase 39 an einem federelastisch ausfederbaren Federschenkel 40. Das gehäuseseitige Sperrglied 38 ist aus einem mit Anlaufschräge versehenen Vorsprung 41 gebildet, der von der Nase 39 unter Einfedern des Federschenkels 40 überrastbar ist.

Die besondere Form des Luftführungskanals 14 mit den beiden endseitigen, etwa tangential gerichteten Kanalabschnitten 18 und 19 ermöglicht in beiden Betriebsrichtungen gemäß Pfeil 16 bzw. 17 eine im wesentlichen spiralförmige Luftführung. Die Luft wird über die Kanalabschnitte 18 bzw. 19 bis hin zu den zugeordneten Luftaustrittsöffnungen 24 und 25 geleitet. Dabei sind jeweils breite Luftaustrittsöffnungen 24, 25 verwirklicht. Gleichwohl ist die Stabilität aufgrund der Stege 20, 21 und der damit einstückigen Leitwände 28,29 sehr groß. Aufgrund der erfindungsgemäßen Ausbildung kann daher der vom Radialgebläse geförderte Luftvolumenstrom erheblich gesteigert werden, und dies sowohl bei Rechtslauf gemäß Pfeil 16 als auch bei Linkslauf gemäß Pfeil 17, wobei gerade bei Linkslauf durch die etwa konkave Krümmung der Leitwand 29 noch eine erhebliche Verbesserung im Vergleich zu lediglich radialen Luftaustrittsöffnungen erzielt ist. Durch die Luftführung bis hin zu den Luftaustrittsöffnungen 24, 25 sind etwaige Störungen, insbesondere Wirbel oder ähnliches, ausgeschlossen. Die etwa tangentiale Luftführung und auch die etwa trichterförmige Erweiterung des Durchlaßquerschnittes bis hin zu den Luftaustrittsöffnungen 24, 25 führt zu einer zusätzlichen Verbesserung der Luftströmung und des Luftmengendurchsatzes. Zugleich wird die Geräuschentwicklung vermindert.

## Patentansprüche

1. Von Hand führbare elektrische Werkzeugmaschine (10), mit einem Gehäuse (11), einem darin enthaltenen Motor zum Antrieb eines Werkzeugs und mit einem Radialgebläse (13), insbesondere zur Kühlung des Motors, das im Gehäuse (11) ein Lüfterrad sowie mindestens einen in Umfangsrichtung sich über annähernd 360° Umfangswinkel erstreckenden und mit Luftaustrittsöffnungen (15) in Verbindung stehenden Luftführungskanal (14) aufweist, dadurch gekennzeichnet, daß der Luftführungskanal (14) in jedem der beiden in Richtung der jeweiligen Strömung (Pfeile 16, 17) gesehenen endseitigen Bereiche zumindest einen zum Luftführungskanal (14) etwa tangential angeordneten Kanalabschnitt (18, 19) wesentlicher Breite aufweist, der mindestens eine Luftaustrittsöffnung (24, 25) enthält.

2. Werkzeugmaschine nach Anspruch 1, **dadurch gekennzeichnet,** daß jeder Kanalabschnitt (18, 19) mittels einzelner Stege (20, 22) dazwischen in mehrere Einzelkanalabschnitte (21, 23) unterteilt ist.

3. Werkzeugmaschine nach Anspruch 2, **dadurch gekennzeichnet**, daß die Einzelkanalabschnitte (21, 23) jedes Kanalabschnitts (18, 19) auf gleicher Höhe nebeneinander verlaufen.

4. Werkzeugmaschine nach einem der Ansprüche 1 - 3, **dadurch** **gekennzeichnet**, daß die etwa tangentialen Kanalabschnitte (18, 19) derart angeordnet sind, daß der Luftführungskanal (14) für jede der beiden Strömungsrichtungen (Pfeile 16, 17) einen etwa spiralförmigen Verlauf aufweist.

5. Werkzeugmaschine nach einem der Ansprüche 1 - 4, **dadurch** **gekennzeichnet,** daß die beiden seitlichen Kanalwände jedes Einzelkanalabschnittes (21, 23) durch je einen Steg (20, 22) und die in radialer Richtung äußere Kanalwand sowie innere Kanalwand jeweils durch eine allen Einzelkanalabschnitten (21, 23) gemeinsame und jeweils durchgehende Leitwand (26 - 29) gebildet sind.

6. Werkzeugmaschine nach einem der Ansprüche 1 - 5, **dadurch** **gekennzeichnet**, daß die Einzelkanalabschnitte (21, 23) der etwa tangentialen Kanalabschnitte (18, 19) unmittelbar übereinander angeordnet sind.

7. Werkzeugmaschine nach einem der Ansprüche 1 - 6, **dadurch** **gekennzeichnet**, daß die in radialer Richtung innere Leitwand (28) des einen etwa tangentialen Kanalabschnitts (18) etwa eben oder leicht konvex nach außen gekrümmt ist.

8. Werkzeugmaschine nach einem der Ansprüche 1 - 7, **dadurch** **gekennzeichnet**, daß die in radialer Richtung innere Leitwand (29) des anderen etwa tangentialen Kanalabschnitts (19) etwa konkav gekrümmt ist.

9. Werkzeugmaschine nach einem der Ansprüche 1 - 8, **dadurch** **gekennzeichnet**, daß die inneren Leitwände (28, 29) beider etwa tangentialer Kanalabschnitte (18, 19) endseitig und im Bereich der Luftaustrittsöffnungen (24, 25) zusammengeführt und vorzugsweise miteinander verbunden sind.

10. Werkzeugmaschine nach Anspruch 9, **dadurch** **gekennzeichnet**, daß die beiden zusammengeführten Leitwände (28, 29) im Querschnitt etwa einen Keil bilden.

11. Werkzeugmaschine nach Anspruch 10, **dadurch** **gekennzeichnet**, daß die Firstlinie (30) des Keils etwa parallel zur Achse des Rotors ausgerichtet ist.

12. Werkzeugmaschine nach einem der Ansprüche 1 - 11, **dadurch** **gekennzeichnet**, daß sich der Durchlaßquerschnitt der Kanalabschnitte (18, 19) in der jeweiligen Strömungsrichtung (Pfeile 16, 17) zu den Luftaustrittsöffnungen (24, 25) hin etwa trichterförmig erweitert.

13. Werkzeugmaschine nach einem der Ansprüche 1 - 12, **dadurch** **gekennzeichnet**, daß die in radialer Richtung inneren Leitwände (28, 29) miteinander einstückig verbunden sind.

14. Werkzeugmaschine nach einem der Ansprüche 2 - 13, **dadurch** **gekennzeichnet,** daß die einzelnen Stege (20, 22) beider etwa tangentialer Kanalabschnitte (18, 19) zu jeweils durchgehenden Wänden verbunden sind, vorzugsweise miteinander und mit den inneren Leitwänden (28, 29) einstückig sind.

15. Werkzeugmaschine nach einem der Ansprüche 1 - 14, **gekennzeichnet** **durch** ein die inneren Leitwände (28, 29) und die Stege (20, 22) aufweisendes, eigenständiges Einsatzteil (31).

16. Werkzeugmaschine nach Anspruch 15, **dadurch** **gekennzeichnet**, daß das Einsatzteil (31) in eine z. B. seitliche Öffnung (32) in der Gehäusewandung (12) eingesetzt ist.

17. Werkzeugnaschine nach Anspruch 15 oder 16, **dadurch** **gekennzeichnet**, daß das Einsatzteil (31) zugleich als gegen Eindringen von Schmutz, Grobteilen od. dgl. schützende Schutzverkleidung ausgebildet ist.

18. Werkzeugmaschine nach einem der Ansprüche 15 - 17, **dadurch** **gekennzeichnet**, daß das Einsatzteil (31) als Kunststofformteil ausgebildet ist.

19. Werkzeugmaschine nach einem der Ansprüche 15 - 18, **dadurch** **gekennzeichnet**, daß das Einsatzteil (31) am Gehäuse (11) formschlüssig fixiert und gesichert ist.

20. Werkzeugmaschine nach Anspruch 19, **dadurch** **gekennzeichnet,** daß das Einsatzteil (31) etwa hakenförmige, vorzugsweise angeformte, Halter (33, 34) aufweist, mit denen das Einsatzteil (31) auf diesen zugeordnete Schiebebahnen (35, 36) im Gehäuse (11) aufgeschoben ist.

21. Werkzeugmaschine nach einem der Ansprüche 15 - 20, **dadurch gekennzeichnet,** daß das Einsatzteil (31) zumindest einen, vorzugsweise angeformten, Riegel (37) aufweist, der beim Befestigen am Gehäuse (11) hinter einem gehäusesseitigen Sperrglied (38) einrastbar ist.

22. Werkzeugmaschine nach Anspruch 21,**dadurch gekennzeichnet,** daß der Riegel (37) aus einer Nase (39) an einem Federschenkel (40) und das gehäuseseitige Sperrglied (38) aus einem Vorsprung (41) gebildet ist, der von der Nase (39) unter Einfedern des Federschenkels (40) überrastbar ist.

## Claims

1. Hand-guidable electric machine tool (10), having a casing (11), a motor contained therein for driving a tool, and having, particularly for cooling the motor, a radial fan (13) which comprises in the casing (11) a fan wheel and at least one air guide duct (14) which extends in the circumferential direction over a circumferential angle of approximately 360° and is in communication with air outlet openings (15), characterized in that the air guide duct (14) has in each of the two end regions, viewed in the direction of the respective flow (arrows 16, 17), at least one duct portion (18, 19) of substantial width, which is arranged approximately tangentially to the air guide duct (14) and which contains at least one air outlet opening (24, 25).

2. Machine tool according to Claim 1, characterized in that each duct portion (18, 19) is subdivided by means of interposed individual webs (20, 22) into a plurality of duct portion subdivisions (21, 23).

3. Machine tool according to Claim 2, characterized in that the duct portion subdivisions (21, 23) of each duct portion (18, 19) extend side by side at the same height.

4. Machine tool according to one of Claims 1 to 3, characterized in that the approximately tangential duct portions (18, 19) are arranged such that the air guide duct (14) follows an approximately spiral path for each of the two directions of flow (arrows 16, 17).

5. Machine tool according to one of Claims 1 to 4, characterized in that the two lateral duct walls of each duct portion subdivision (21, 23) are each formed by a web (20, 22), and the radially outer duct wall and the radially inner duct wall are in each case formed by a guide wall (26 - 29) which is common to all the duct portion subdivisions (21, 23) and in each case is continuous.

6. Machine tool according to one of Claims 1 to 5, characterized in that the duct portion subdivisions (21, 23) of the approximately tangential duct portions (18, 19) are arranged directly one above the other.

7. Machine tool according to one of Claims 1 to 6, characterized in that the radially inner guide wall (28) of the one approximately tangential duct portion (18) is approximately flat or slightly convexly curved outwards.

8. Machine tool according to one of Claims 1 to 7, characterized in that the radially inner guide wall (29) of the other approximately tangential duct portion (19) is somewhat concavely curved.

9. Machine tool according to one of Claims 1 to 8, characterized in that the inner guide walls (28, 29) of the two approximately tangential duct portions (18, 19) are brought together, and preferably joined to one another, at the ends and in the region of the air outlet openings (24, 25).

10. Machine tool according to Claim 9, characterized in that the two guide walls (28, 29) brought together approximately form a wedge in cross-section.

11. Machine tool according to Claim 10, characterized in that the ridge line (30) of the wedge is aligned approximately parallel to the axis of the motor.

12. Machine tool according to one of Claims 1 to 11, characterized in that the passage cross-section of the duct portion (18, 19) is widened approximately in funnel fashion in the respective direction of flow (arrows 16, 17) towards the air outlet openings (24, 25).

13. Machine tool according to one of Claims 1 to 12, characterized in that the radially inner guide walls (28, 29) are integrally joined together.

14. Machine tool according to one of Claims 2 to 13, characterized in that the individual webs (20, 22) of both the approximately tangential duct portions (18, 19) are in each case joined to form continuous walls and are preferably integral with one another and with the inner guide walls (28, 29).

15. Machine tool according to one of Claims 1 to 14, characterized by an independent insert (31) comprising the inner guide walls (28, 29) and the webs (20, 22).

16. Machine tool according to Claim 15, characterized in that the insert (31) is inserted into an opening (32) provided, for example at the side, in the casing wall (12).

17. Machine tool according to Claim 15 or 16, characterized in that the insert (31) is formed at the same time as a protective covering protecting against the penetration of dirt, coarse particles or the like.

18. Machine tool according to one of Claims 15 to 17, characterized in that the insert (31) is in the form of a plastics moulding.

19. Machine tool according to one of Claims 15 to 18, characterized in that the insert (31) is positively fastened and secured to the casing (11).

20. Machine tool according to Claim 19, characterized in that the insert (31) has approximately hook-shaped, preferably integrally moulded, holders (33, 34) by which the insert (31) is pushed onto slideways (35, 36) provided for them in the casing (11).

21. Machine tool according to one of Claims 15 to 20, characterized in that the insert (31) has at least one, preferably integrally moulded, latch (37) which, on fastening to the casing (11), engages behind a catch member (38) on the casing.

22. Machine tool according to Claim 21, characterized in that the latch (37) is composed of a beak (39) on a spring arm (40) and the catch member (38) on the casing is composed of a projection (41) over which the beak (39) can engage through the snapping in of the spring arm (40).

## Revendications

1. Machine-outil électrique pouvant être guidée à la main, avec un boîtier (11), un moteur contenu dedans pour entraîner un outil et avec une soufflante radiale (13), en particulier pour le refroidissement du moteur, qui présente dans le boîtier (11) une roue de ventilation ainsi qu'au moins un canal de guidage de l'air (14) s'étendant dans le sens périphérique sur un angle d'approximativement 360° et se trouvant en liaison avec des ouvertures de sortie de l'air (15), caractérisée en ce que le canal de guidage de l'air (14) présente dans chacune des deux zones terminales vues dans le sens de l'écoulement correspondant (flèches 16, 17), au moins une section de canal (18, 19) disposée en direction du canal de guidage de l'air (14) à peu près tangentiellement, d'une largeur importante, section qui contient au moins une ouverture de sortie de l'air (24, 25).

2. Machine-outil selon la revendication 1, caractérisée en ce que chaque section de canal (18, 19) est subdivisée en plusieurs sections individuelles de canaux (21, 23) au moyen de différentes entretoises (20, 22) placées entre elles.

3. Machine-outil selon la revendication 2, caractérisée en ce que les différentes sections de canaux (21, 23) de chaque section de canal (18, 19) s'étendent les unes à côté des autres à la même hauteur.

4. Machine-outil selon l'une des revendications 1 à 3, caractérisée en ce que les sections de canaux à peu près tangentielles (18, 19) sont disposées de telle façon que le canal de guidage de l'air (14) présente pour chacun des deux sens d'écoulement (flèches 16, 17) un parcours en forme à peu près de spirale.

5. Machine-outil selon l'une des revendications 1 à 4, caractérisée en ce que les deux parois latérales de canaux de chaque section individuelle de canal (21, 23) sont formées chacune par une entretoise (20, 22) et la paroi externe de canal ainsi que la paroi interne de canal dans le sens radial par une paroi directrice (26 à 29) commune à toutes les sections individuelles de canal (21, 23) et respectivement traversante.

6. Machine-outil selon l'une des revendications 1 à 5, caractérisée en ce que les différentes sections de canaux (21, 23) des sections de canaux à peu près tangentielles (18, 19) sont disposées directement les unes au-dessus des autres.

7. Machine-outil selon l'une des revendications 1 à 6, caractérisée en ce que la paroi directrice (28) intérieure dans le sens radial de l'une des sections de canaux (18) à peu près tangentielle est à peu près plane ou légèrement recourbée de façon convexe vers l'extérieur.

8. Machine-outil selon l'une des revendications 1 à 7, caractérisée en ce que la paroi directrice interne (29) dans le sens radial de l'autre section de canal (19) à peu près tangentielle est recourbée de façon à peu près concave.

9. Machine-outil selon l'une des revendications 1 à 8, caractérisée en ce que les parois directrices internes 28, 29 des deux sections de canaux à peu près tangentielles (18, 19) se trouvent au bout et sont réunies dans la zone des ouvertures de sortie de l'air (24, 25) et de préférence reliées l'une avec l'autre.

10. Machine-outil selon la revendication 9, caractérisée en ce que les deux parois directrices réunies (28, 29) forment à peu près en section transversale un coin.

11. Machine-outil selon la revendication 10, caractérisée en ce que la ligne de faîte (30) du coin est orientée à peu près en parallèle à l'axe du rotor.

12. Machine-outil selon l'une des revendications 1 à 11, caractérisée en ce que la section transversale de passage des sections de canaux (18, 19) dans le sens correspondant d'écoulement (flèches 16, 17) s'élargit en direction des ouvertures de sortie de l'air (24, 25) à peu près en forme d'entonnoir.

13. Machine-outil selon l'une des revendications 1 à 12, caractérisée en ce que les parois directrices internes dans le sens radial (28, 29) sont reliées les unes aux autres pour ne former qu'une seule pièce.

14. Machine-outil selon l'une des revendications 2 à 13, caractérisée en ce que les différentes entretoises (20, 22) des deux sections de canaux à peu près tangentielles (18, 19) sont reliées aux parois respectivement traversantes et forment de préférence les unes avec les autres et avec les parois directrices internes (28, 29) une seule pièce.

15. Machine-outil selon l'une des revendications 1 à 14, caractérisée par un insert (31) autonome, présentant les parois directrices internes (28 et 29) et les entretoises (20, 22).

16. Machine-outil selon la revendication 15, caractérisée en ce que l'insert (31) est inséré dans une ouverture par exemple latérale (32) dans la paroi du carter (12).

17. Machine-outil selon la revendication 15 ou 16, caractérisée en ce que l'insert (31) est constitué en même temps comme un revêtement protecteur protégeant contre l'introduction de poussières, de particules grossières, ou analogues.

18. Machine-outil selon l'une des revendications 15 à 17, caractérisée en ce que l'insert (31) est constitué comme une pièce usinée en matière plastique.

19. Machine-outil selon l'une des revendications 15 à 18, caractérisée en ce que l'insert (31) est fixé et bloqué sur le carter (11) par engagement positif.

20. Machine-outil selon la revendication 19, caractérisée en ce que l'insert (31) présente des supports (33, 34) en forme de crochets, de préférence rapportés, avec lesquels l'insert (31) est enfilé sur les pistes associées (35, 36) dans le boîtier (11).

21. Machine-outil selon l'une des revendications 15 à 20, caractérisée en ce que l'insert (31) présente au moins un verrou (37) de préférence rapporté, qui peut être encliqueté lors de la fixation sur le boîtier (11) en arrière d'un organe d'arrêt (38) du côté du boîtier.

22. Machine-outil selon la revendication 21, caractérisée en ce que le verrou (37) est formé d'un nez (39) sur une branche élastique (40) et l'organe d'arrêt (38) situé du côté du boîtier est constitué par une saillie (41) qui peut être comprimée par le nez (39) en enfonçant élastiquement la branche (40).
